# DEMANDE DE BREVET EUROPEEN

(11) **EP 1 209 545 A1**
(43) Date de publication de la demande: **29.05.2002**
(21) Numéro de dépôt: 00811118.9
(22) Date de dépôt: 23.11.2000
(51) Int. Cl.: G05B 19/4093

(54) **Procédé de commande d'un robot industriel**

(71) Demandeur: IRIS Robotique Sàrl, 2025 Chez-le-Bart (CH)
(72) Inventeur: Chenaux, David, 2017 Boudry (CH); Galley, Yves, 2017 Boudry (CH)
(74) Mandataire: Reuteler, Raymond Werner

(57) **Abrégé**

Le robot industriel est commandé par un procédé selon lequel, sur une trajectoire déterminée (T), l'avance est commandée par un moyen mécanique de commande selon un seul axe, par exemple une manivelle (33).

De cette manière, la commande d'avance est absolument univoque, ce qui est un avantage important relativement aux dispositifs de commande de l'art antérieur.

## Description

La présente invention concerne un procédé de commande d'un robot industriel, notamment d'un robot utilisé pour porter et utiliser un outil d'usinage ou pour porter une pièce à usiner et la présenter devant un ou plusieurs outils d'usinage. L'invention concerne en outre une unité de commande d'un robot industriel, un robot industriel, aptes à fonctionner selon ledit procédé, un centre d'usinage muni d'un tel robot ainsi qu'un support informatique comportant un programme informatique apte à exécuter ledit procédé.

Dans de nombreuses applications d'usinage automatique, on tend à remplacer plusieurs axes d'usinage par un seul robot d'usinage, appelé parfois bras robotisé, apte à saisir un outil, déplacer cet outil vers la portion de pièce à usiner, orienter convenablement l'outil en face de la portion de pièce à usiner, usiner cette portion de pièce, retirer l'outil et le ramener vers sa place de stockage. Vu que le robot remplace plusieurs axes d'usinage, il doit notamment être apte à déplacer l'outil entre un premier point ayant de premières coordonnées selon trois axes orthogonaux vers un point de travail ayant d'autres coordonnées, de même qu'à l'incliner autour d'un axe quelconque de l'espace, selon un axe de travail, puis à faire travailler l'outil à partir de cette position. Cet usinage terminé, il est procédé à un autre usinage en une autre position de l'espace ou alors l'outil est ramené à sa place de stockage.

Selon une autre configuration d'une intégration d'un robot dans un centre d'usinage, le robot est apte à saisir la pièce à usiner et à la présenter devant un ou plusieurs outils successifs pour son usinage, puis à la ramener et la déposer dans un endroit de stockage. Comme plus haut, le robot doit notamment être apte à déplacer la pièce à usiner entre un premier point ayant de premières coordonnées selon trois axes orthogonaux vers un point de travail ayant d'autres coordonnées, de même qu'à l'incliner autour d'un axe quelconque de l'espace, selon un axe de travail, puis à la présenter à l'outil d'usinage pour usinage à partir de cette position. Cet usinage terminé, il est procédé à un autre usinage en une autre position de l'espace ou alors la pièce est amenée à sa place de stockage.

Une unité de commande numérique, commandée par un programme informatique, est généralement utilisée pour commander le robot. Vu la complexité des mouvements du robot, il peut être utile, lors de la préparation du programme de commande, de faire effectuer pas à pas à l'outil ou à la pièce une trajectoire entre deux points de l'espace, la trajectoire pouvant être une droite, une courbe dans l'espace reliant ces deux points ou une succession de segments de droite et/ou de courbes. Effectuer cette trajectoire pas à pas permet de constater si en un point quelconque de cette trajectoire existe un risque de collision entre l'outil ou la pièce, ou une portion quelconque du robot, et un autre objet de l'environnement.

Le déplacement pas à pas du robot, respectivement de l'outil ou de la pièce entre deux points déterminés d'une trajectoire est obtenu jusqu'à présent au moyen d'un curseur électronique disposé sur un tableau de commande ou d'une souris ou d'un joystick relié audit tableau de commande. De manière générale ces moyens de commande sont inappropriés et peu pratiques pour cet usage spécifique. Par un curseur électronique, il est impossible de contrôler la position exacte de l'outil ou de la pièce le long de la trajectoire alors que la souris ou le joystick, aptes à commander un déplacement dans un plan, ne sont pas prévus ou sont peu commodes pour commander un déplacement le long d'une trajectoire linéaire.

Un premier but de l'invention est donc de proposer un procédé de commande d'un robot industriel amélioré relativement aux procédés de commande connus.

Un deuxième but de l'invention est de proposer un procédé de commande d'un robot industriel utilisant un dispositif permettant un déplacement entièrement contrôlé d'un outil ou d'une pièce sur une trajectoire entre deux points de l'espace.

Un troisième but de l'invention est de proposer une unité de commande apte à fonctionner selon ledit procédé.

Un autre but de l'invention est de proposer une unité de commande numérique modifiée et programmée afin de fonctionner selon ledit procédé.

Un autre but de l'invention est de proposer un robot industriel amélioré apte à fonctionner à l'aide du procédé précédent.

Un autre but de l'invention est de proposer un centre d'usinage équipé d'au moins un tel robot industriel.

Encore un autre but de l'invention est de proposer un programme de commande disposé sur un support informatique et apte à exécuter ledit procédé

Ces différents buts sont obtenus par un procédé de commande tel que décrit dans la revendication 1, une unité de commande telle que décrite dans la revendication 14, un robot industriel tel que décrit dans la revendication 17, un centre d'usinage comme décrit dans la revendication 19 ainsi qu'un support informatique muni d'un programme, tel que décrit dans la revendication 20. Des variantes d'exécution sont décrites dans les revendications dépendantes.

L'invention est décrite en détail ci-dessous, cette description étant à considérer en regard du dessin annexé comportant les figures où :
la figure 1 représente un robot industriel commandé par un procédé de commande selon l'invention,
la figure 2 montre l'utilisation du procédé selon l'invention pour la commande de déplacement d'un robot industriel.

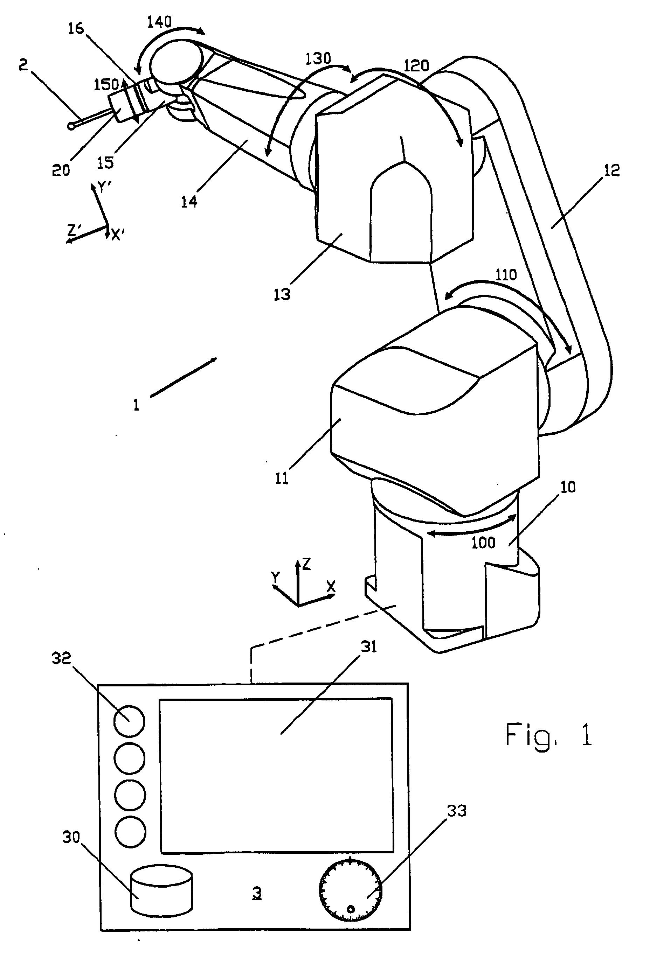

On voit sur la figure 1 un robot industriel 1 composé de sept éléments ou bras, 10, 11, 12, 13, 14, 15 et 16, reliés chacun par une articulation 100, 110, 120, 130, 140 et 150 à un degré de liberté donnant à l'ensemble six degrés de liberté, permettant donc à l'outil 2 porté par le porte-outil 20 disposé à l'extrémité du dernier bras 16, de prendre n'importe quelle position dans l'espace

Chacune des articulations 100, 110, 120, 130, 140 et 150 permet d'orienter le bras suivant, porté par ladite articulation, autour d'un axe de rotation parallèle ou perpendiculaire à la direction du bras portant ladite articulation. Une unité de commande 3, par exemple une commande numérique, commande l'ensemble des articulation 100, 110, 120, 130, 140 et 150 pour le déplacement et l'orientation de l'outil 2. Pour le cas où l'outil 2 est un outil travaillant en rotation, comme par exemple une mèche, un fraise ou une meule, le porte-outil 20 comprend un moyen de mise en rotation de l'outil 2, indépendant des rotations des articulations. La mise en rotation ou l'arrêt de rotation de l'outil 2 est aussi commandé par l'unité de commande 3.

Dans le cas des robots de type anthropomorphe ou polyarticulé comme représenté ici, on distingue trois types de référentiels d'axes possibles. Selon le premier type, on y un référentiel orthonormé XYZ comme représenté sur la figure, fixe relativement à une base du robot, par exemple relativement à la table support du robot. Les mouvements du robot sont commandés le long et autour de ces trois axes XYZ. Selon le deuxième type de référentiel d'axes, celui-ci est aussi orthonormé X'Y'Z', comme représenté aussi sur la figure, mais est fixé cette fois à l'extrémité du dernier bras 16 du robot, l'un des axes, Z' par exemple, étant disposés dans le prolongement dudit bras. Les mouvements du robot sont commandés le long et autour de ces trois axes X'Y'Z'. Le troisième type de référentiel correspond à des pivotements commandés indépendamment de chacune des articulations 100, 110, 120, 130, 140 et 150.

L'unité de commande 3 comprend notamment un programme de commande, schématisé par le disque 30, un écran d'affichage 31 et un dispositif d'entrée, comme par exemple un clavier de commande 32, une souris ou tout autre dispositif adapté à cet usage. L'unité de commande selon l'invention comprend en outre un dispositif de commande manuel rotatif à un seul axe, comme par exemple un bouton rotatif, un volant ou une manivelle 33, permettant de commander le déplacement de l'outil 2 selon une trajectoire prédéterminée comme il sera expliqué plus bas.

De manière générale, le programme de commande 30 contrôle les différents mouvements du robot 1 de manière à ce qu'il puisse aller prélever un outil depuis un endroit de stockage, amener cet outil en face de la pièce à usiner, placer et orienter l'outil pour l'usinage, usiner la pièce, retirer l'outil et le ramener pour le déposer à son endroit de stockage.

A cet effet, le programme 30 est apte à commander les déplacement du robot 1 en choisissant le référentiel d'axes le mieux adapté à la trajectoire à suivre, le choix du référentiel d'axes pouvant aussi être imposé par l'utilisateur, par exemple via le clavier de commande 32.

Vu la complexité des mouvements du robot 1 lors des opérations d'usinage, il est nécessaire de contrôler, au moins pour certaines étapes critiques, que ni l'outil 2, ni aucune partie du robot 1 n'entre en contact avec une portion quelconque d'un élément de l'environnement du robot.

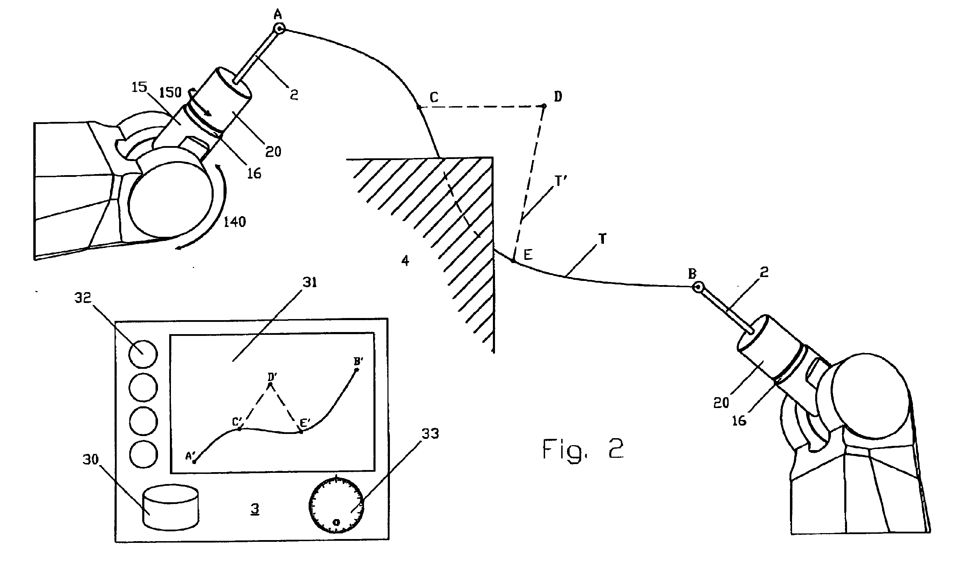

La figure 2 montre une trajectoire T entre deux points A et B que doit suivre la pointe de l'outil 2. Cette trajectoire T est quelconque, par exemple une courbe gauche comme représentée ici, l'outil 2 étant de plus orienté différemment au point B de ce qu'il était au point A.

La trajectoire prédéterminée T entre les points A et B est fournie par le programme de commande 30 selon l'un des trois référentiels d'axes décrits précédemment. De manière préférentielle elle est reportée sur l'écran 31 entre les points A' et B'. Le programme de commande 30 peut être obtenu par exemple par programmation de la commande numérique 3, par un programme préparé sur un ordinateur adéquat et implanté dans ladite commande numérique ou alors en définissant au moins deux points de l'espace, un programme adéquat étant alors apte à définir la trajectoire reliant ces points. Le programme de commande 30 permettant de faire fonctionner un robot industriel selon le procédé décrit ici peut être obtenu sur n'importe quel type de support informatique, comme par exemple une disquette, un disque dur ou tout autre support, ou alors peut être chargé via un réseau comme par exemple le réseau Internet.

Afin de suivre manuellement cette trajectoire T, l'utilisateur commande le passage en manuel à l'aide du dispositif d'introduction de données, respectivement du clavier 32. Cette action retire au programme 30 la commande d'avance le long de la trajectoire T et attribue cette commande d'avance à la manivelle 33. Ainsi, entre les points A et B, la pointe de l'outil 2 suit une trajectoire prédéterminée T fournie par le programme 30, l'avance le long de cette trajectoire T étant commandé par la manivelle 33, le référentiel d'axes utilisé restant généralement celui attribué par le programme 30 à cette trajectoire T.

Relativement aux dispositifs de commande connus mentionnés en introduction, la manivelle, le bouton rotatif ou le volant a l'avantage de ne commander de manière univoque qu'un seul axe, soit celui d'avance le long de la trajectoire T. Ainsi en tournant la manivelle dans un sens, vers la droite par exemple, la pointe de l'outil 2 se déplace sur la trajectoire T de A vers B, quelle que soit la forme de la trajectoire T, tenant en outre compte des variations d'orientation éventuelles de l'outil 2 le long de cette trajectoire. En tournant la manivelle 33 en sens opposé, la pointe de l'outil parcourt la trajectoire T en sens inverse.

Par une commande du clavier 32, il est possible de choisir le degré d'avance le long de la trajectoire en fonction de la rotation de la manivelle ; par exemple on peut choisir qu'il faille un tour de manivelle pour aller de A à B ou 10 tours de manivelle pour le même trajet ou alors chaque graduation du cadran entourant la manivelle peut correspondre à une longueur ou un angle déterminé selon le mouvement envisagé.

La vitesse de rotation de la manivelle 33 peut aussi être considérée, la vitesse de déplacement le long de la trajectoire T étant proportionnelle à la vitesse de rotation de la manivelle.

Si le long de la trajectoire T la pointe de l'outil 2 est susceptible de rencontrer un obstacle, schématisé en 4, il est nécessaire de modifier la trajectoire T afin d'éviter la collision avec cet obstacle. Pour ceci, dès que l'utilisateur constate au point C que l'outil se rapproche trop d'un obstacle 4, il stoppe l'avance de l'outil 2 en arrêtant de tourner la manivelle, il commande, à l'aide du clavier 32 d'interrompre la commande de déplacement le long de la trajectoire T, puis toujours sur le clavier 32, choisit un axe et un sens de déplacement permettant d'éviter l'obstacle 4 et parcourt ce nouveau trajet T' en utilisant la manivelle 33 comme précédemment. Lorsqu'il a atteint un point D, hors d'atteinte de l'obstacle 4, il commande un nouvel axe et un nouveau sens de déplacement de l'outil pour rejoindre la trajectoire T au point E, d'où il peut à nouveau commander le déplacement de l'outil le long de cette trajectoire, comme décrit précédemment. Ainsi en introduisant la nouvelle trajectoire T', qui peut être de forme quelconque, passant par D entre les points C et E, la pointe de l'outil 2 évite d'entrer en collision avec l'obstacle 4 lors de son déplacement entre A et B. De manière connue, la nouvelle trajectoire T' entre les points C et D est mémorisée sur le programme 30, de manière à ce que lors de l'usinage le programme commande le déplacement de l'outil de A à B passant par C, D et E.

De manière préférentielle, lors du changement de trajectoire au point C, l'opérateur a le choix entre rester dans le référentiel utilisé entre le point A et le point C ou changer de référentiel. De préférence il choisira le référentiel le plus approprié à la trajectoire T' qu'il prévoit de parcourir.

Comme mentionné plus haut, la vérification de non collision décrite ci-dessus pour la pointe de l'outil 2 peut se faire pour n'importe quelle partie constitutive en mouvement du robot 1.

Lorsque le déplacement le long d'une trajectoire se fait selon l'un des deux référentiels cartésiens XYZ ou X'Y'Z', que ce déplacement soit commandé directement par le programme 30 ou par la manivelle 33, il pourrait se trouver un point singulier de la trajectoire où au moins l'une des articulations est en bout de course et où le robot doit se reconfigurer afin de poursuivre la trajectoire. Une telle reconfiguration implique généralement un mouvement très rapide et brusque de plusieurs des articulations du robot, ces mouvements pouvant aussi être sources de collisions avec l'environnement du robot. Afin d'éviter ceci, le programme 30 contrôle la vitesse de pivotement de chacune des articulations 100, 110, 120, 130, 140 et 150, et commande l'arrêt du mouvement le long de la trajectoire T ou T' dans le cas où une valeur limite de cette vitesse de pivotement est dépassée. Une signalisation appropriée indique que cet arrêt est dû à une reconfiguration nécessaire du robot.

Bien que la description qui précède concerne un robot portant un outil d'usinage, l'invention s'applique aussi parfaitement et de la même manière à un robot portant la pièce à usiner.

Le robot industriel 1 décrit ici est de type anthropomorphe ou polyarticulé, comprenant 7 bras et 6 articulations ayant chacune un degré de liberté. Il est évident que le procédé de commande s'applique aussi à des robots de même type comprenant moins d'articulations, le robot ayant éventuellement moins de degrés de liberté ou alors certaines des articulations comportant plus d'un degré de liberté. Un robot de type cartésien ou encore d'un autre type pourrait tout aussi bien être commandé par un procédé selon l'invention. Un ou plusieurs robots tels que décrits peuvent équiper un centre d'usinage.

## Revendications

1. Procédé de commande en déplacement d'un élément (2) d'un robot industriel (1) entre deux points (A, B) de l'espace sur une trajectoire prédéterminée (T),
**caractérisé en ce que**
pour une trajectoire de forme quelconque, le déplacement dudit élément (2) peut être commandé par un dispositif de commande manuel rotatif à un seul axe (33).

2. Procédé de commande selon la revendication 1, **caractérisé en ce que** la trajectoire prédéterminée (T) de forme quelconque est fournie par un programme (30) de commande de trajectoire du robot implanté dans une unité de commande (3).

3. Procédé de commande selon la revendication 2, **caractérisé en ce que** l'unité de commande (3) peut être commandée de manière à déplacer ledit élément de robot entre deux points d'une trajectoire (T) soit automatiquement sous l'action du programme (30), soit manuellement sous l'action du dispositif de commande manuel rotatif à un seul axe (33).

4. Procédé de commande selon l'une des revendications précédentes, **caractérisé en ce que** la trajectoire (T) de forme quelconque selon laquelle l'élément dudit robot est déplacé est déterminée dans un référentiel orthonormé (XYZ) fixe relativement à une base (10) dudit robot, le déplacement se faisant le long et/ou autour d'au moins un desdits axes.

5. Procédé de commande selon l'une des revendications 1 à 3, **caractérisé en ce que** la trajectoire (T) de forme quelconque selon laquelle l'élément dudit robot est déplacé est déterminée dans un référentiel orthonormé (X'Y'Z') fixe relativement à une extrémité (16) dudit robot, le déplacement se faisant le long et/ou autour d'au moins un desdits axes.

6. Procédé de commande selon l'une des revendications 1 à 3, **caractérisé en ce que** la trajectoire (T) de forme quelconque selon laquelle l'élément dudit robot est déplacé découle d'un pivotement d'au moins une articulation (100,110,120,130,140,150) constitutive dudit robot.

7. Procédé de commande selon l'une des revendications précédentes, **caractérisé en ce que** le déplacement dudit élément de robot le long de la trajectoire quelconque est proportionnel à l'angle de rotation imposé audit dispositif de commande manuel rotatif (33).

8. Procédé de commande selon l'une des revendications précédentes, **caractérisé en ce que** la vitesse de déplacement dudit élément de robot le long de la trajectoire quelconque est proportionnelle à la vitesse d'actionnement dudit dispositif de commande manuel rotatif (33).

9. Procédé de commande selon l'une des revendications précédentes, **caractérisé en ce qu'**il comprend une fonction permettant en un premier point quelconque (C) de quitter ladite trajectoire prédéterminée (T), de créer une nouvelle trajectoire (T'), puis de retrouver la trajectoire prédéterminée (T) en un deuxième point (E).

10. Procédé de commande selon l'une des revendications précédentes, **caractérisée en ce qu'**il comprend une fonction permettant de stopper le déplacement dudit élément le long de la trajectoire (T,T') en un point de cette trajectoire situé juste avant un point singulier nécessitant une reconfiguration du robot.

11. Procédé de commande selon l'une des revendications précédentes, **caractérisé en ce qu'**il s'applique au déplacement d'un outil (2) porté par le robot.

12. Procédé de commande selon l'une des revendications 1 à 10, **caractérisé en ce qu'**il s'applique au déplacement d'une pièce à usiner portée par le robot.

13. Procédé de commande selon l'une des revendications 1 à 10, **caractérisé en ce qu'**il s'applique à un portion constitutive quelconque dudit robot.

14. Unité de commande (3) d'un robot industriel apte à fonctionner selon le procédé de l'une des revendications précédentes, **caractérisée en ce qu'**elle est munie d'un dispositif de commande manuel rotatif à un seul axe (33) et **en ce qu'**elle comprend un programme informatique (30) permettant d'interpréter le déplacement d'un élément (2) d'un robot industriel (1) entre deux points (A, B) de l'espace sur une trajectoire prédéterminée (T).

15. Unité de commande selon la revendication 14, **caractérisée en ce que** le dispositif de commande manuel rotatif à un seul axe est constitué d'une manivelle ou d'un bouton rotatif ou d'un volant.

16. Unité de commande selon la revendication15, **caractérisée en ce que** la manivelle, le bouton rotatif ou le volant est muni d'un cadran gradué.

17. Robot industriel (1) apte à être commandé par un procédé de commande selon l'une des revendications 1 à 13.

18. Robot industriel selon la revendication 17, **caractérisé en ce qu'**il s'agit d'un robot anthropomorphe ou polyarticulé.

19. Centre d'usinage équipé d'au moins un robot industriel selon l'une des revendications 17 ou 18.

20. Support de données informatique (30) directement chargeable dans la mémoire numérique d'une commande numérique (3) munie d'un élément de commande manuel rotatif à un seul axe (33), comprenant un programme informatique exécutable par ladite commande numérique pour lui faire exécuter le procédé de commande selon l'une des revendications 1 à 13.
